# EUROPEAN PATENT SPECIFICATION

(11) **EP 3 155 784 B1**
(45) Date of publication and mention of the grant of the patent: **19.12.2018**
(21) Application number: 14732532.8
(22) Date of filing: 13.06.2014
(51) Int. Cl.: H04L 29/06, H04W 4/00

(54) **MACHINE TO MACHINE CAPABILITIES IN MOBILE COMMUNICATION NETWORKS**
MASCHINE-MASCHINE-FÄHIGKEITEN IN MOBILKOMMUNIKATIONSNETZWERKEN
CAPACITÉS DE MACHINE À MACHINE DANS DES RÉSEAUX DE COMMUNICATION MOBILE

(43) Date of publication of application: 19.04.2017
(73) Proprietor: Nokia Solutions and Networks Oy, 02610 Espoo (FI)
(72) Inventor: CHANDRAMOULI, Devaki, Plano, Texas 75025 (US); LIEBHART, Rainer, 81476 Munich (DE); SARTORI, Cinzia, 82049 Pullach (DE)
(74) Representative: Nokia EPO representatives
(86) International application number: PCT/EP2014/062433
(87) International publication number: WO 2015/188880

(56) References cited:
- EP-A1- 2 603 021
- WO-A1-2011/052136
- US-A1- 2013 051 228
- "3rd Generation Partnership Project; Technical Specification Group Services and System Aspects; Study on Machine-Type Communications (MTC) and other mobile data applications communications enhancements (Release 12)", 3GPP STANDARD; 3GPP TR 23.887, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V12.0.0, 20 December 2013 (2013-12-20), pages 1-151, XP050729146, [retrieved on 2013-12-20]

## Description

### Field

The present invention relates to machine to machine capabilities in mobile communication networks. More specifically, the present invention exemplarily relates to measures (including methods, apparatuses and computer program products) for realizing machine to machine capabilities in mobile communication networks.

### Background

The present specification generally relates to mobile communications networks as well as machine to machine (M2M) communication utilizing such networks.

The Evolved Packet System (EPS) as an example of such communication networks is known as a successor of the General Packet Radio Service (GPRS). Compared to GPRS, EPS provides, among others, radio interfaces and packet core network functions for broadband wireless data access. Such packet core network functions are, for example, a mobility management entity (MME), a packet data network gateway (PDN-GW), and a serving gateway (S-GW).

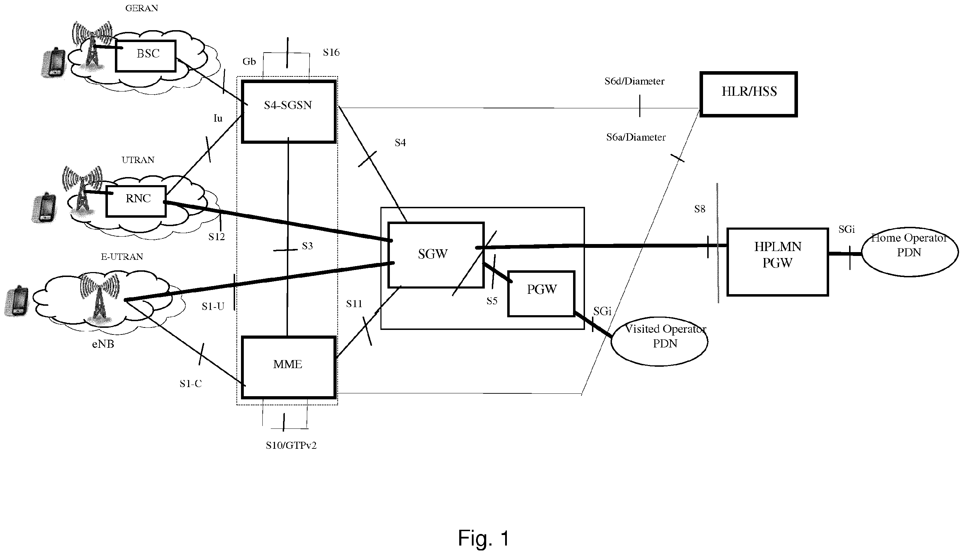

Principles of the EPS are shown in Figure 1, illustrating a known evolved packet core architecture. A common packet domain core network is used for radio access networks (RAN) global system for mobile communication enhanced radio access network (GSM enhanced radio access network, GERAN) and universal terrestrial radio access network (UTRAN). The common core network (CN) provides GPRS services.

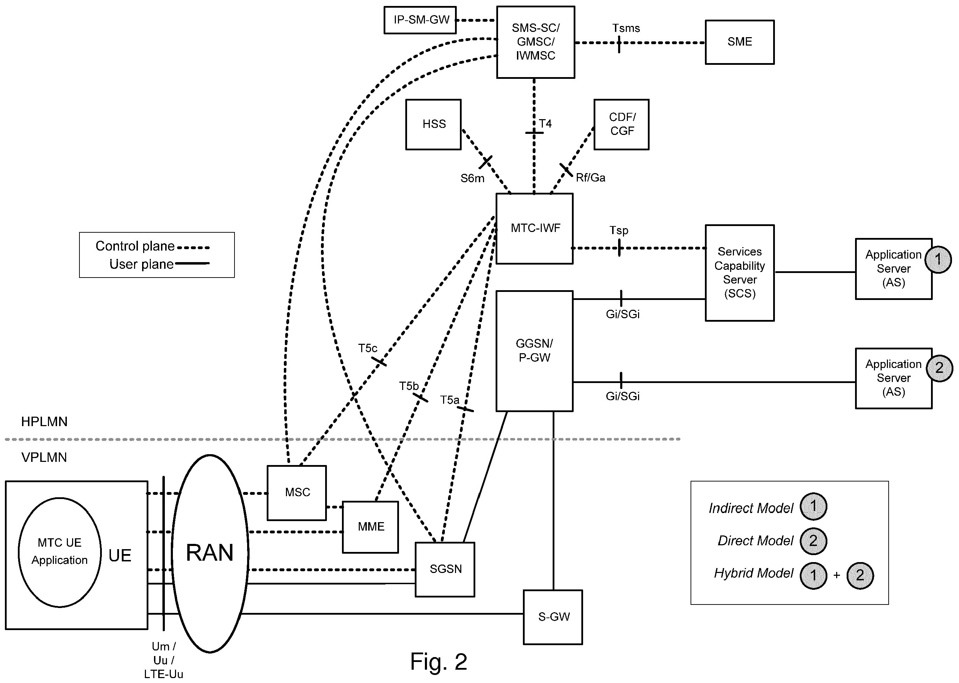

For Machine-Type-Communication (MTC), a functional entity (MTC interworking function, MTC-IWF) as well as some interfaces (S6m, Tsp, Tsms, T5a/b/c and T4) are known as shown in Figure 2, illustrating an architecture for MTC according to the 3^{rd} Generation Partnership Project (3GPP).

The main purpose of the MTC-IWF and the mentioned interfaces is to enable triggering of devices, e.g. in order to establish a packet data network (PDN) connection/packet data protocol (PDP) context, with or without mobile subscriber integrated services digital network number (MSISDN) from an internal or external MTC Server.

Some independent features such as device triggering and power saving mode are known in relation to MTC in 3GPP network deployments.

In sum, the following related features (intended to be used for special device classes/applications) are known from 3GPP communication networks:
- overload, congestion control related features,
- architecture option for device triggering using legacy short message service (SMS), packet switched (PS) only, dual priority feature,
- PSM.
- dedicated core networks for M2M devices.

In detail, for instance, a device triggering using SMS with standard interface to short message service centre (SMSC) is known. However, such device triggering does not work for devices that do not support SMS. A device triggering based on SMS is further disadvantageous for devices that are frequently transmitting small data.

However, the choice of the feature used for small data transmission is known to be left to the choice of the mobile station (e.g. user equipment (UE)), and network/operators does not have any control in relation to the usage of SMS for frequent small data transmission (or avoiding frequent establishment of EPS bearer). Furthermore, according to known techniques, there may be no choice for different type of devices (mobile stations) and applications (running on mobile stations), as the operator has to pre-configure the device trigger solution for all devices in the same way.

As a further example, a power saving mode (PSM) is known. However, such PSM is useful only for devices that are mostly initiating mobile originated (MO) transmission only.

Furthermore, the exemplary network deployment 3GPP long term evolution (LTE)/ system architecture evolution (SAE) assumes that every device (mobile station) requires always-on connectivity and seamless mobility. However, from operator's perspective it is costly to support seamless mobility and always on connectivity for all devices even if these devices do not require such treatment.

With respect to the mentioned and comparable features it turned out that each operator may have own favorite use cases that should be addressed by support for MTC.

As a consequence, although chipset cost is one main driving factor for M2M devices to remain in GSM networks (notwithstanding that a low cost LTE chipset is planned), lack of a set of standardized provisions for end to end (E2E) architectures is a further considerable reason why M2M devices are not migrating towards LTE network.

Hence, the problem arises that approaches are to be provided enabling a whole spectrum of use cases (devices and applications) with respect to MTC/M2M communications, i.e. addressing the needs of different applications running in M2M devices (or other devices/UEs such as smartphones).

A further arising problem is identified as the ability to classify devices. It is hard to classify devices with certain characteristics as smart devices can support a multitude of application and each application has its own unique characteristics.

Hence, there is a need to provide for machine to machine capabilities in mobile communication networks (such as e.g. LTE networks and similar).

EP 2 603 021 A1 discloses a Short Message Service (SMS) delivery method including receiving, at a network node, an Attach/Routing Area Update (RAU) Request message including a parameter indicating an attach/update type and SMS-only service, and transmitting, when SMS in a Serving General Packet Radio Service (GPRS) Support Node (SGSN) is supported at the core network node, to the mobile station an Attach Accept message including a parameter indicating that SMS in SGSN is supported.

3GPP TR 23.887, V12.0.0 discloses architectural enhancements for Machine-Type and other mobile data applications Communications including UE Power optimizations.

WO 2011/052136 A1 discloses a method to reduce wastage of network resources and mobile phone resources in which a mobile phone indicates its status in a tracking area update message indicating that the mobile phone is capable of delivering packets to the device. In this case a server is permitted to initiate communications.

US 2013/051228 A1 discloses a method for controlling traffic congestion of MTC devices in a machine type communication (MTC) service. A core network node (for example, MME, MSC, SGSN, etc) performs scheduling and rescheduling procedures on data communication traffic for MTC devices using subscription information and congestion control information.

### Summary

Various exemplary embodiments of the present invention aim at addressing at least part of the above issues and/or problems and drawbacks.

Various aspects of exemplary embodiments of the present invention are set out in the appended claims.

According to an exemplary aspect of the present invention, there is provided a method for performing machine type communication, comprising establishing a connection to obtain machine type communication related services identified by an access point name or a service flow identifier from the network, receiving information indicative of a feature of a group of features assigned to a certain functionality, said feature being selected from said group of features based on usage conditions of said connection, and utilizing said feature for said certain functionality in relation to said connection.

According to an exemplary aspect of the present invention, there is provided a method for enabling machine type communication, comprising receiving a connection establishment request for a certain access point name or a certain service flow identifier related to machine type communication, selecting a feature from a group of features assigned to a certain functionality based on usage conditions of said connection, and receiving information indicative of said feature to be utilized for said certain functionality in relation to said connection.

According to an exemplary aspect of the present invention, there is provided an apparatus for performing machine type communication, comprising establishing means configured to establish a connection to obtain certain machine type communication related services identified by an access point name or a service flow identifier, receiving means configured to receive information indicative of a feature of a group of features assigned to a certain functionality, said feature being selected from said group of features based on usage conditions of said connection, and utilizing means configured to utilize said feature for said certain functionality in relation to said connection.

According to an exemplary aspect of the present invention, there is provided an apparatus for enabling machine type communication, comprising receiving means configured to receive a connection establishment request for a certain access point name or a certain service flow identifier related to machine type communication, and selecting means configured to select a feature from a group of features assigned to a certain functionality based on usage conditions of said connection, and wherein said receiving means is further configured to receive information indicative of said feature to be utilized for said certain functionality in relation to said connection.

According to an exemplary aspect of the present invention, there is provided a computer program product comprising computer-executable computer program code which, when the program is run on a computer (e.g. a computer of an apparatus according to any one of the aforementioned apparatus-related exemplary aspects of the present invention), is configured to cause the computer to carry out the method according to any one of the aforementioned method-related exemplary aspects of the present invention.

Such computer program product may comprise (or be embodied) a (tangible) computer-readable (storage) medium or the like on which the computer-executable computer program code is stored, and/or the program may be directly loadable into an internal memory of the computer or a processor thereof.

Any one of the above aspects enables an efficient saving of resources that may not be necessary for an application by being able to optimally decide on appropriate feature for a desired functionality to thereby solve at least part of the problems and drawbacks identified in relation to the prior art.

By way of exemplary embodiments of the present invention, there is provided machine to machine capabilities in mobile communication networks. More specifically, by way of exemplary embodiments of the present invention, there are provided measures and mechanisms for realizing machine to machine capabilities in mobile communication networks.

Thus, improvement is achieved by methods, apparatuses and computer program products enabling/realizing machine to machine capabilities in mobile communication networks.

### Brief description of the drawings

In the following, the present invention will be described in greater detail by way of non-limiting examples with reference to the accompanying drawings, in which
Figure 1 is a schematic diagram illustrating a known evolved packet core architecture,
Figure 2 is a schematic diagram illustrating an architecture for MTC according to the 3GPP,
Figure 3 is a block diagram illustrating an apparatus according to exemplary embodiments of the present invention,
Figure 4 is a block diagram illustrating an apparatus according to exemplary embodiments of the present invention,
Figure 5 is a block diagram illustrating an apparatus according to exemplary embodiments of the present invention,
Figure 6 is a schematic diagram of a procedure according to exemplary embodiments of the present invention,
Figure 7 is a schematic diagram of a procedure according to exemplary embodiments of the present invention,
Figure 8 is a schematic diagram illustrating an exemplary progress of a procedure according to exemplary embodiments of the present invention,
Figure 9 is a schematic diagram illustrating an exemplary progress of a procedure according to exemplary embodiments of the present invention,
Figure 10 is a schematic diagram illustrating an exemplary progress of a procedure according to exemplary embodiments of the present invention,
Figure 11 is a block diagram alternatively illustrating apparatuses according to exemplary embodiments of the present invention.

### Detailed description of drawings and embodiments of the present invention

The present invention is described herein with reference to particular non-limiting examples and to what are presently considered to be conceivable embodiments of the present invention. A person skilled in the art will appreciate that the invention is by no means limited to these examples, and may be more broadly applied.

It is to be noted that the following description of the present invention and its embodiments mainly refers to specifications being used as non-limiting examples for certain exemplary network configurations and deployments. Namely, the present invention and its embodiments are mainly described in relation to 3GPP specifications being used as non-limiting examples for certain exemplary network configurations and deployments. As such, the description of exemplary embodiments given herein specifically refers to terminology which is directly related thereto. Such terminology is only used in the context of the presented non-limiting examples, and does naturally not limit the invention in any way. Rather, any other communication or communication related system deployment, etc. may also be utilized as long as compliant with the features described herein.

Hereinafter, various embodiments and implementations of the present invention and its aspects or embodiments are described using several variants and/or alternatives. It is generally noted that, according to certain needs and constraints, all of the described variants and/or alternatives may be provided alone or in any conceivable combination (also including combinations of individual features of the various variants and/or alternatives).

According to exemplary embodiments of the present invention, in general terms, there are provided measures and mechanisms for (enabling/realizing) machine to machine capabilities in mobile communication networks.

According to exemplary embodiments of the present invention, operators/network side entities are able to offer a set of features that are necessary and fit to a certain set of applications and/or devices. Namely, as an example, one set of applications/devices may be defined to require no mobility, a further set may be defined to require only very infrequent connection, and a further set may be defined to require very low latency and high bandwidth.

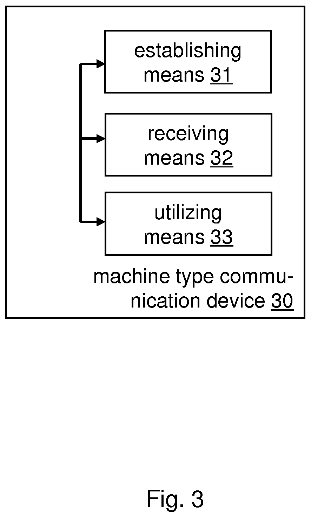

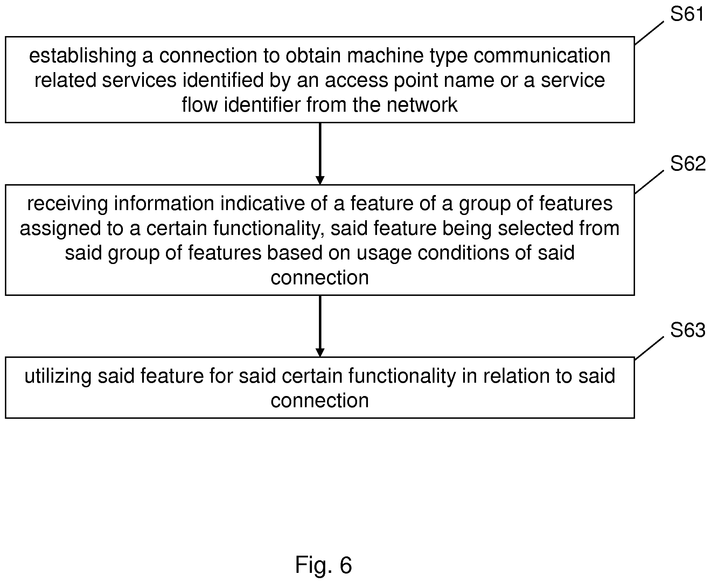

Figure 3 is a block diagram illustrating an apparatus 30 according to exemplary embodiments of the present invention. The apparatus 30 may be a machine type communication device (i.e. a device capable of machine type communication) such as a UE comprising establishing means 31, receiving means 32, and utilizing means 33. The establishing means 31 establishes a connection to obtain (machine type communication related) services identified by an access point name (APN) or a service flow identifier from the network. Further, the receiving means 32 receives information indicative of a feature of a group of features assigned to a certain functionality. In doing so, the feature being selected from the group of features based on usage conditions of said connection. Furthermore, the utilizing means 33 utilizes said feature for said certain functionality in relation to said connection. Figure 6 is a schematic diagram of a procedure according to exemplary embodiments of the present invention. The apparatus according to Figure 3 may perform the method of Figure 6 but is not limited to this method. The method of Figure 6 may be performed by the apparatus of Figure 3 but is not limited to being performed by this apparatus.

As shown in Figure 6, a procedure according to exemplary embodiments of the present invention comprises an operation of establishing (S61) a connection to obtain (machine type communication related) services identified by an APN or a service flow identifier from the network, an operation of receiving (S62) information indicative of a feature of a group of features assigned to a certain functionality, said feature being selected from said group of features based on certain characteristics such as device type, type of application(s), subscribed features, charging rates and nature of request from the device (desired features and functions) for said connection (i.e. usage conditions of said connection), and an operation of utilizing (S63) said feature for said certain functionality in relation to said connection.

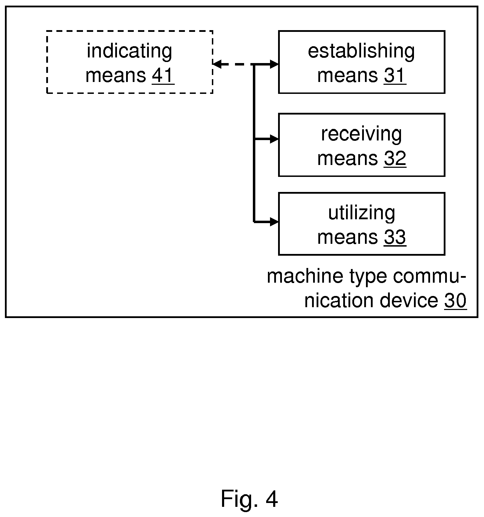

Figure 4 is a block diagram illustrating an apparatus according to exemplary embodiments of the present invention. In particular, Figure 4 illustrates a variation of the apparatus shown in Figure 3. The apparatus according to Figure 4 may thus further comprise indicating means 41.

According to a variation of the procedure shown in Figure 6, exemplary details of the establishing operation are given, which are inherently independent from each other as such.

Such exemplary establishing operation according to exemplary embodiments of the present invention may comprise an operation of indicating at least one preferred feature of said group of features for a certain functionality.

Alternatively, such exemplary establishing operation according to exemplary embodiments of the present invention may comprise an operation of indicating at least one supported feature of said group of features for a certain functionality.

Alternatively, such exemplary establishing operation according to exemplary embodiments of the present invention may comprise an operation of indicating at least one application intended to use said connection.

According to further exemplary embodiments of the present invention, said usage conditions comprise at least one of a type of device establishing said connection, a type of applications intended for said connection, a subscribed functionality for said connection, network capabilities, available charging rates, and a nature of said establishing of said connection.

According to further exemplary embodiments of the present invention, said certain functionality is small data transmission, and said group of features comprises at least one of transmission utilizing a short message service, transmission utilizing a user plane bearer, transmission utilizing control plane signaling, transmission utilizing a shared user plane bearer, and transmission utilizing a bearer set up on demand.

According to further exemplary embodiments of the present invention, said certain functionality is a power saving mechanism, and said group of features comprises at least one of a power saving mode and an extended discontinuous reception cycle.

According to still further exemplary embodiments of the present invention, said certain functionality is mobility of a device establishing said connection, and said group of features may comprise a list of allowed cells, allowed tracking area identities (TAI), and/or allowed radio access technologies (RAT). This may also comprise cells within the same frequency, cells in inter-frequency area, and/or cells that belong to different RATs.

According to further exemplary embodiments of the present invention, said certain functionality is mobility of a device establishing said connection. Furthermore, according to a corresponding variation of the procedure shown in Figure 6, exemplary details of the establishing operation are given, which are inherently independent from each other as such. Such exemplary establishing operation according to exemplary embodiments of the present invention may comprise an operation of indicating a predetermined list of allowed cells, allowed tracking areas (TA), and/or allowed RATs. Furthermore, the information indicative of said feature is a grant or a rejection of said established connection based on said predetermined list and a cell being subject of said establishing.

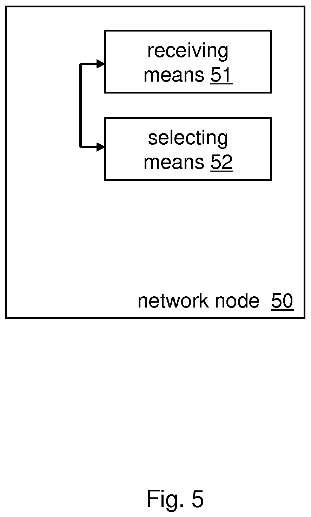

Figure 5 is a block diagram illustrating an apparatus 50 according to exemplary embodiments of the present invention. The apparatus 50 may be a network node (e.g. enabling machine type communication) such as a base station (e.g. an evolved NodeB (eNodeB, eNB) in case of LTE, a 5G access point (5GAP) in case of 5G being a new radio access technology succeeding 4G), or a MME, or a combination thereof comprising receiving means 51 and selecting means 52.

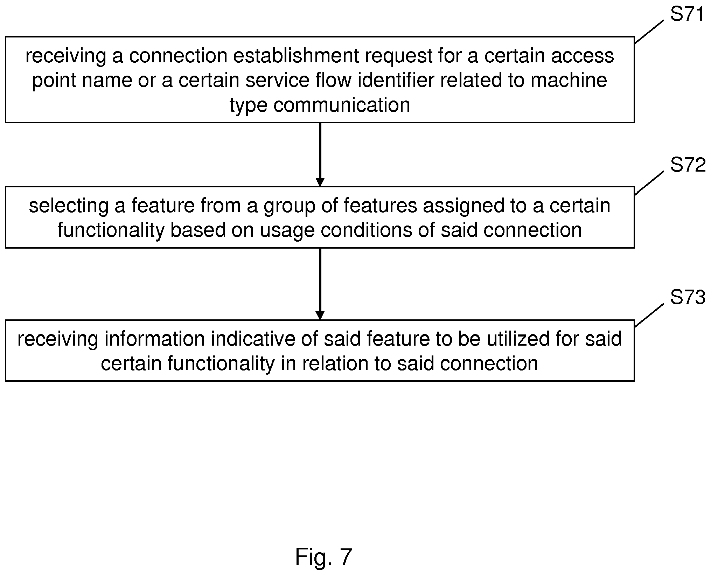

The receiving 51 means receives a connection establishment request for a certain access point name or a certain service flow identifier (e.g. a request for certain services such as network connectivity) related to machine type communication. Further, the selecting means 52 selects a feature from a group of features assigned to a certain functionality based on usage conditions of said connection. In addition, the receiving means 51 further receives information indicative of the feature to be utilized for said certain functionality in relation to said connection. Figure 7 is a schematic diagram of a procedure according to exemplary embodiments of the present invention. The apparatus according to Figure 5 may perform the method of Figure 7 but is not limited to this method. The method of Figure 7 may be performed by the apparatus of Figure 5 but is not limited to being performed by this apparatus.

As shown in Figure 7, a procedure according to exemplary embodiments of the present invention comprises an operation of receiving (S71) a connection establishment request for a certain access point name or a certain service flow identifier (e.g. a request for certain services) related to machine type communication, an operation of selecting (S72) a feature from a group of features assigned to a certain functionality based on usage conditions of said connection, and an operation of receiving (S73) information indicative of said feature to be utilized for said certain functionality in relation to said connection.

According to further exemplary embodiments of the present invention, said connection establishment indicates at least one preferred feature of said group of features for a certain functionality. Alternatively, said connection establishment indicates at least one supported feature of said group of features for a certain functionality. As a further alternative, said connection establishment request indicates at least one application intended to use said connection, e.g. in the form of an application identifier.

According to further exemplary embodiments of the present invention, said usage conditions comprise at least one of a type of device establishing said connection, a type of applications intended for said connection, a subscribed functionality for said connection, network capabilities, available charging rates, and a nature of said establishing of said connection.

According to further exemplary embodiments of the present invention, said certain functionality is small data transmission, and said group of features comprises at least one of transmission utilizing a short message service, transmission utilizing a user plane bearer, transmission utilizing control plane signaling, transmission utilizing a shared user plane bearer, and transmission utilizing a bearer set up on demand.

According to further exemplary embodiments of the present invention, said certain functionality is a power saving mechanism, and said group of features comprises at least one of a power saving mode and an extended discontinuous reception cycle.

According to further exemplary embodiments of the present invention, said certain functionality is mobility of a device establishing said connection, and said group of features comprises a list of allowed cells, allowed TAs, and/or allowed RATs.

According to still further exemplary embodiments of the present invention, said certain functionality is mobility of a device establishing said connection, said connection establishment indicates a predetermined list of allowed cells, and said information indicative of said feature is a grant or a rejection of said established connection based on said predetermined list and a cell being subject of said connection establishment.

In the following, above mentioned exemplary embodiments of the present invention are described in other words.

Namely, according to exemplary embodiments of the present invention a concept ("tool box") is introduced that offers a set of features (group of settings) to address a spectrum of M2M applications/devices and to introduce the ability for the operators to select features (settings) to be activated depending on the device type, type of application(s), subscribed features, charging rates and/or nature of request from the device etc. (desired features and functions).

In particular, a collection of functionalities for M2M devices is provided and is offered to the respective M2M device.

According to exemplary embodiments of the present invention, a list of features may be provided that are available in the M2M device (e.g. UE) and the network to offer certain functionality (e.g. a list of features (settings) that are available to support small data transmission, device triggering, power saving mode, and so on).

In detail, according to exemplary embodiments of the present invention, it is enabled/allowed for M2M devices and the network to negotiate desired/required features (settings).

In particular, according to exemplary embodiments, some or all of the following principles are introduced to serve M2M devices in LTE. It is noted that the same principles may likewise be applied to devices other than dedicated M2M devices and also for evolved network architectures for new radio technologies (e.g. 5G).

Namely, according to exemplary embodiments of the present invention, the M2M devices are able to indicate the application identifiers (ID) for all applications that are being activated for a certain session.

This may be the application ID that uniquely identifies the application itself. It should be noted that all common mobile operating systems (e.g. iOS, Windows OS, Android) have namespaces that identify the applications within this operating system.

Alternatively, this may be an M2M specific application ID that is not OS specific but characterizes the application in a generic manner. This application ID may either be public land mobile network (PLMN) specific or global. Whether such ID is global or PLMN specific may be determined based on the contents of the application ID. If the ID is PLMN specific, the application ID may include the PLMN ID. Otherwise, if the application ID is global, PLMN ID may be wild carded. This M2M application ID may be negotiated between network operator and M2M service provider, so that the operator is aware of the application characteristics and its needs. These characteristics may be stored in the network and may be used to select the correct features/settings that are needed to serve the devices/application needs.

Further, according to exemplary embodiments of the present invention, the M2M devices are able to indicate its preference for features/settings that are supported to accomplish the same functionality (e.g. support for UP based transmission (feature/setting) versus SMS (feature/setting) for small data transmission (certain functionality)).

Further, according to exemplary embodiments of the present invention, the network (i.e. network element(s)) is able to use different criteria and to activate the corresponding feature/setting for the M2M device. In addition, the network is able to convey the activated setting(s) to the device during registration of the M2M device.

According to still further embodiments of the present invention, a support for mobility on demand (instead of mobility by default) is added to the M2M device(s) and the network (mobility as a service).

The thus introduced principles are in the following described in more detail in the context of illustrative examples for the certain functionalities (such as small data transmission, low power consumption and mobility management). Although these examples are explained separately, the M2M device and the network may negotiate the use of several features/settings (for certain functionalities) in parallel.

It is further noted that these specific examples are not limiting examples for the present invention. According to exemplary embodiments, further functionalities (satisfying further needs of applications possibly running in a M2M device) may thus be negotiated between the M2M device and the network as well considering the above mentioned principles of the present invention.

As a first example of the certain functionalities, small data transmission is used to illustrate exemplary embodiments of the present invention.

A UE can transmit and receive small data either using SMS or using user plane (UP) bearers (e.g. using over-the-top (OTT) methods or SMS over internet protocol (IP)). The option used to transmit small data is based on UE preference rather than based on operator policy/network preference.

Accordingly, the UE may not always use the option that is most optimal from network perspective. If the UE needs to send small data infrequently and it uses a UP bearer (which is setup and torn down every time), then this is very sub-optimal (excessive signaling incurred to setup and tear down bearers). Similarly, if the UE needs to send small data frequently and it uses SMS every time, then this is also very suboptimal (excessive UP load in the control plane (CP) entity which is not designed for this purpose).

According to exemplary embodiments of the present invention, further features/settings are also possible for such small data transmission, such as sending small data using CP signaling, sending small data using shared (group) bearers (UP), and setting up bearer on demand (e.g. LTE "attach" or 5G "attach" without default bearer and signaling connectivity only).

Both, network and UE (M2M device), may support only a certain set of features (group of settings). Hence, according to exemplary embodiments of the present invention, network and UE negotiate and determine the appropriate feature (setting) that should be activated when UE registers with the network.

This allows operator's policy to be enforced and also ensures that the selected feature (setting) is optimal for the application running in the UE at a certain point in time (requirements of an application can change over time).

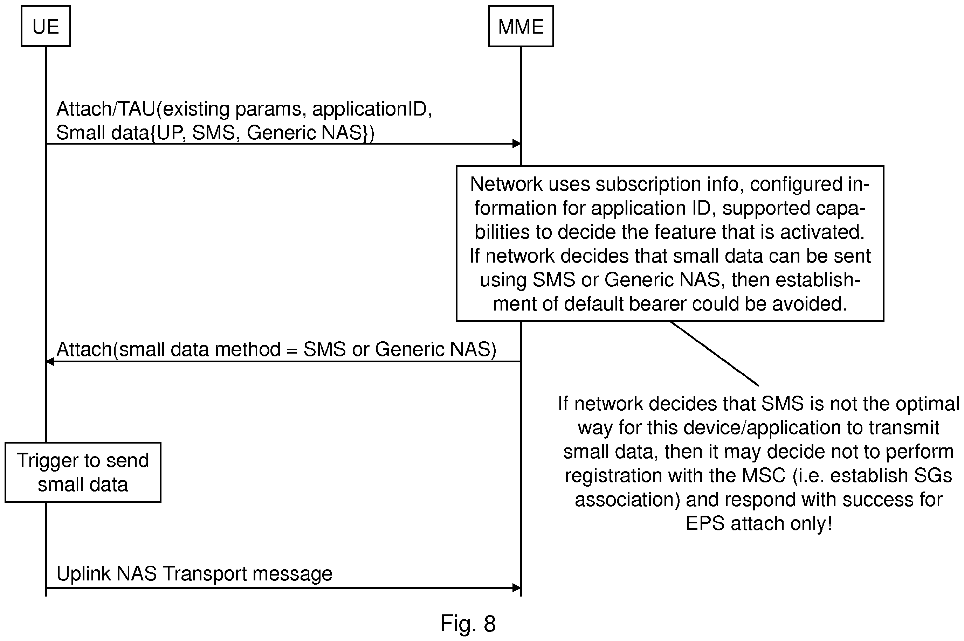

Figure 8 is a schematic diagram illustrating an exemplary progress of a procedure according to exemplary embodiments of the present invention related to the illustrative example small data transmission.

In particular, Figure 8 illustrates an exemplary progress for the case the network decides to use SMS or generic non-access stratum (NAS) protocol rather than e.g. UP bearer.

As is shown in Figure 8, UE is sending small data infrequently. Thus, the network decides to activate transmission using CP signaling (one example is to use generic NAS messages to transport small data). In particular, the network uses subscription information, configured information for a provided application ID, and/or supported capabilities to decide (select) the feature (setting) that is activated. Here, the network decides that small data can be sent using SMS or generic NAS. In doing so, establishment of a default bearer can be avoided.

Thus, network may also optimize establishment of bearers and establishment of security gateway's (SG) association (assuming this is a monolithic device running only a single application that requires a certain characteristics).

This negotiation according to exemplary embodiments of the present invention helps the network to optimize the resources needed for low cost M2M devices.

If, to the contrary, the network decides that SMS is not the optimal way for this device/application to transmit small data, the network may decide (select) not to perform registration with a mobile switching center (MSC), i.e., establish SG's association, and may respond to the device only with a success for EPS attach.

As a further example of the certain functionalities, power saving (mechanism) is used to illustrate exemplary embodiments of the present invention.

UEs and the network may support power saving mode (PSM). However, the PSM has some limitations since the UE remains unreachable for mobile terminated (MT) services when it enters PSM. Also, this mode is effective only when the periodic tracking area update (TAU) timer is set to a very high value. Thus, it works only for a limited set of use cases when the device has mostly MO initiated transmissions and/or MT transmissions are initiated based on polling from the device.

Hence, according to exemplary embodiments additional features (settings) for power saving mechanisms are introduced (e.g. extended discontinuous reception (eDRX) cycle).

For either of the two mentioned settings, end to end (E2E) network support is essential to work in an optimal manner.

For support of PSM mode, network needs to support/implement a certain set of functions while for the support of eDRX network needs to support/implement a different set of functions.

Hence, according to exemplary embodiments of the present invention, when the UE supports one or both modes, the network decides on the appropriate feature (setting) that should be activated based on application characteristics, network capabilities, charging rate (operator may charge differently for the different features) etc.

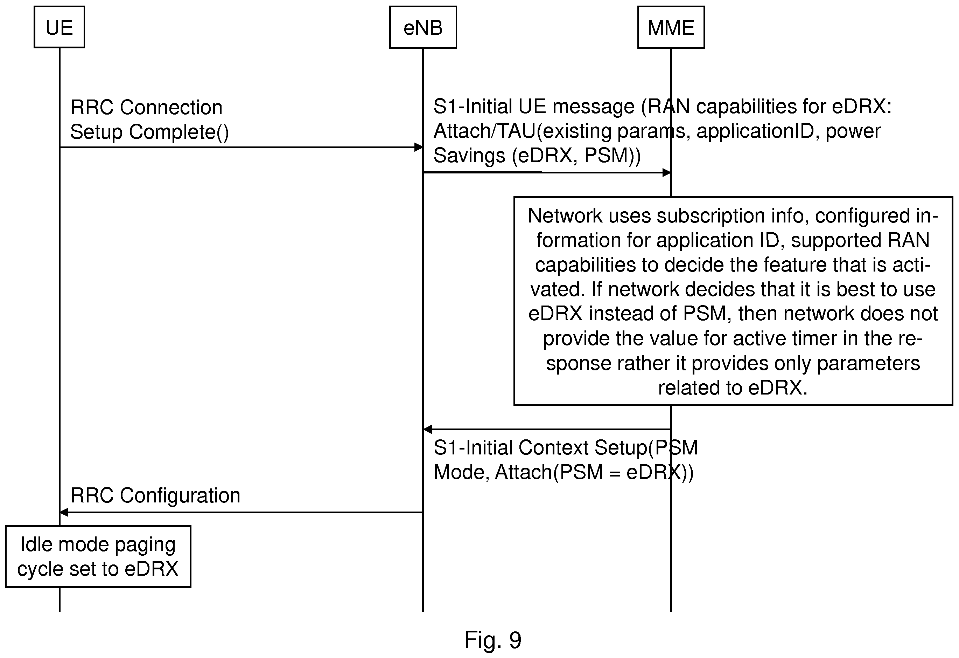

Figure 9 is a schematic diagram illustrating an exemplary progress of a procedure according to exemplary embodiments of the present invention related to power saving mechanisms.

In particular, Figure 9 illustrates an exemplary progress for the case the network decides to use eDRX rather than e.g. PSM.

As is shown in Figure 9, the network decides that the UE should use eDRX for power savings. In particular, the network uses subscription information, configured information for the application ID, and/or supported RAN capabilities to decide (select) the feature (setting) that is activated. If the network decides that it is best to use eDRX instead of PSM, then the network does not provide the value for the active timer (TAU timer) in the response and instead the network may provide only parameters related to eDRX.

According to exemplary embodiments of the present invention, in such case, the eNB may notify the MME that it supports eDRX capabilities, and MME may notify the eNB that eDRX should be activated for the corresponding UE so that paging procedure can be handled appropriately.

As a still further example of the certain functionalities, mobility (management) is used to illustrate exemplary embodiments of the present invention.

Namely, a large number of M2M devices are not mobile but instead stationary. In this case, according to exemplary embodiments of the present invention, mobility procedures may be optimized significantly to save network resources.

One optimization is to introduce the ability to page the UE in the last known cell. Another optimization according to exemplary embodiments of the present invention is introduction of mobility as a service (e.g. for LTE or 5G).

According to those exemplary embodiments of the present invention, the UE is allowed to handover only to a restricted set of cells, and this set of cells is intended to accommodate mobility due to environmental changes and not to accommodate UE mobility.

The restricted list may comprise cells within the same frequency, cells in inter-frequency area, and/or cells that belong to different RATs.

In doing so, according to exemplary embodiments of the present invention, an allowed cell list (e.g. list of evolved universal terrestrial radio access network cell global identifiers (E-UTRAN cell global ID, ECGI)) is built that comprises cells around the area where the UE is camping (cell list configured/determined in network). This allowed cell list may be provided to the UE during initial attach, TAU, or a similar procedure that UE performs in order to register with the network.

According to further exemplary embodiments of the present invention, stationary UE may be configured with allowed cell list (cell list configured in UE/M2M device), and in this case UE's subscription may also indicate the list of allowed cells for the UE(s) that the network can use to perform access control. This list can be used by the UE for cell (re-)selection process.

If the UE moves to a cell (either due to idle mode mobility or connected mode handover) that does not belong to the list provided to the UE, then the request may be rejected with the appropriate reason code by radio network (e.g. eNB in case of LTE, or 5GAP in case of 5G) and/or by the MME/eMME (eMME is similar to MME in 5G).

Optionally, such optimizations may also be related to charging. For instance, stationary device is charged less compared to devices that are fully mobile.

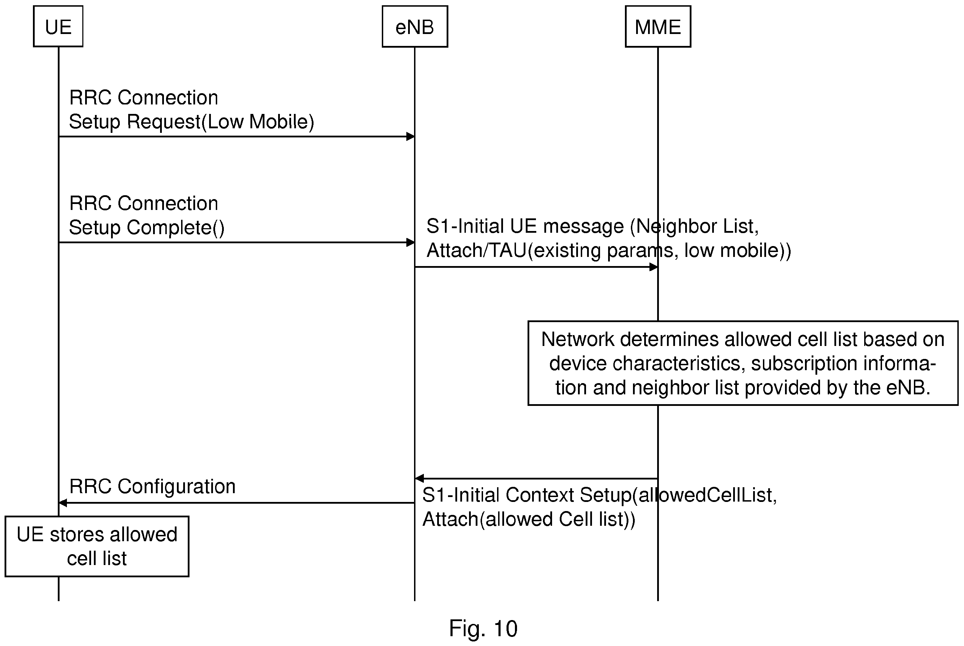

Figure 10 is a schematic diagram illustrating an exemplary progress of a procedure according to exemplary embodiments of the present invention related to mobility management.

In particular, Figure 10 illustrates an exemplary progress for the case the allowed cell list is determined in the network (e.g. MME).

In particular, the network determines the allowed cell list based on device characteristics, subscription information, and/or a neighbor cell list provided by the eNB.

According to exemplary embodiments of the present invention, the network is able to optimally decide on (select) the appropriate feature (setting) that should be activated based on the application(s) activated by the UE. Thus, network can save resources that are not necessary for a certain application. Further, also charging can be adjusted based on the optimizations performed. Thus, the subscriber can be charged less depending on the type of optimizations applied for the device or used applications.

The above-described procedures and functions may be implemented by respective functional elements, processors, or the like, as described below.

In the foregoing exemplary description of the network entity, only the units that are relevant for understanding the principles of the invention have been described using functional blocks. The network entity may comprise further units that are necessary for its respective operation. However, a description of these units is omitted in this specification. The arrangement of the functional blocks of the devices is not construed to limit the invention, and the functions may be performed by one block or further split into sub-blocks.

When in the foregoing description it is stated that the apparatus, i.e. network entity (or some other means) is configured to perform some function, this is to be construed to be equivalent to a description stating that a (i.e. at least one) processor or corresponding circuitry, potentially in cooperation with computer program code stored in the memory of the respective apparatus, is configured to cause the apparatus to perform at least the thus mentioned function. Also, such function is to be construed to be equivalently implementable by specifically configured circuitry or means for performing the respective function (i.e. the expression "unit configured to" is construed to be equivalent to an expression such as "means for").

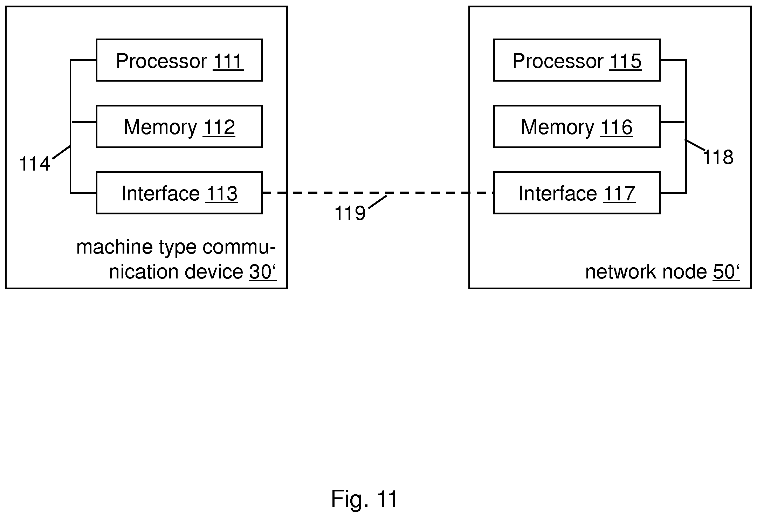

In Figure 11, an alternative illustration of apparatuses according to exemplary embodiments of the present invention is depicted. As indicated in Figure 11, according to exemplary embodiments of the present invention, the apparatus (machine type communication device) 30' (corresponding to the machine type communication device 30) comprises a processor 111, a memory 112 and an interface 113, which are connected by a bus 114 or the like. Further, according to exemplary embodiments of the present invention, the apparatus (network node) 50' (corresponding to the network node 50) comprises a processor 115, a memory 116 and an interface 117, which are connected by a bus 118 or the like, and the apparatuses may be connected via link 119, respectively, and/or may be connected to other apparatuses via such link 119.

The processor 111/115 and/or the interface 113/117 may also include a modem or the like to facilitate communication over a (hardwire or wireless) link, respectively. The interface 113/117 may include a suitable transceiver coupled to one or more antennas or communication means for (hardwire or wireless) communications with the linked or connected device(s), respectively. The interface 113/117 is generally configured to communicate with at least one other apparatus, i.e. the interface thereof.

The memory 112/116 may store respective programs assumed to include program instructions or computer program code that, when executed by the respective processor, enables the respective electronic device or apparatus to operate in accordance with the exemplary embodiments of the present invention.

In general terms, the respective devices/apparatuses (and/or parts thereof) may represent means for performing respective operations and/or exhibiting respective functionalities, and/or the respective devices (and/or parts thereof) may have functions for performing respective operations and/or exhibiting respective functionalities.

When in the subsequent description it is stated that the processor (or some other means) is configured to perform some function, this is to be construed to be equivalent to a description stating that at least one processor, potentially in cooperation with computer program code stored in the memory of the respective apparatus, is configured to cause the apparatus to perform at least the thus mentioned function. Also, such function is to be construed to be equivalently implementable by specifically configured means for performing the respective function (i.e. the expression "processor configured to [cause the apparatus to] perform xxx-ing" is construed to be equivalent to an expression such as "means for xxx-ing").

According to exemplary embodiments of the present invention, an apparatus representing the machine type communication device 30 comprises at least one processor 111, at least one memory 112 including computer program code, and at least one interface 113 configured for communication with at least another apparatus. The processor (i.e. the at least one processor 111, with the at least one memory 112 and the computer program code) is configured to perform establishing a connection to obtain machine type communication related services identified by an APN or a service flow identifier from the network (thus the apparatus comprising corresponding means for establishing), to perform receiving information indicative of a feature of a group of features assigned to a certain functionality, said feature being selected from said group of features based on usage conditions of said connection (thus the apparatus comprising corresponding means for receiving), and to perform utilizing said feature for said certain functionality in relation to said connection (thus the apparatus comprising corresponding means for utilizing).

According to exemplary embodiments of the present invention, an apparatus representing the network node 50 comprises at least one processor 115, at least one memory 116 including computer program code, and at least one interface 117 configured for communication with at least another apparatus. The processor (i.e. the at least one processor 115, with the at least one memory 116 and the computer program code) is configured to perform receiving a connection establishment request for a certain access point name or a certain service flow identifier related to machine type communication (thus the apparatus comprising corresponding means for receiving), to perform selecting a feature from a group of features assigned to a certain functionality based on usage conditions of said connection (thus the apparatus comprising corresponding means for selecting), and to perform receiving information indicative of said feature to be utilized for said certain functionality in relation to said connection.

For further details regarding the operability/functionality of the individual apparatuses, reference is made to the above description in connection with any one of Figures 3 to 10, respectively.

For the purpose of the present invention as described herein above, it should be noted that
- method steps likely to be implemented as software code portions and being run using a processor at a network server or network entity (as examples of devices, apparatuses and/or modules thereof, or as examples of entities including apparatuses and/or modules therefore), are software code independent and can be specified using any known or future developed programming language as long as the functionality defined by the method steps is preserved;
- generally, any method step is suitable to be implemented as software or by hardware without changing the idea of the embodiments and its modification in terms of the functionality implemented;
- method steps and/or devices, units or means likely to be implemented as hardware components at the above-defined apparatuses, or any module(s) thereof, (e.g., devices carrying out the functions of the apparatuses according to the embodiments as described above) are hardware independent and can be implemented using any known or future developed hardware technology or any hybrids of these, such as MOS (Metal Oxide Semiconductor), CMOS (Complementary MOS), BiMOS (Bipolar MOS), BiCMOS (Bipolar CMOS), ECL (Emitter Coupled Logic), TTL (Transistor-Transistor Logic), etc., using for example ASIC (Application Specific IC (Integrated Circuit)) components, FPGA (Field-programmable Gate Arrays) components, CPLD (Complex Programmable Logic Device) components or DSP (Digital Signal Processor) components;
- devices, units or means (e.g. the above-defined network entity or network register, or any one of their respective units/means) can be implemented as individual devices, units or means, but this does not exclude that they are implemented in a distributed fashion throughout the system, as long as the functionality of the device, unit or means is preserved;
- an apparatus like the user equipment and the network entity /network register may be represented by a semiconductor chip, a chipset, or a (hardware) module comprising such chip or chipset; this, however, does not exclude the possibility that a functionality of an apparatus or module, instead of being hardware implemented, be implemented as software in a (software) module such as a computer program or a computer program product comprising executable software code portions for execution/being run on a processor;
- a device may be regarded as an apparatus or as an assembly of more than one apparatus, whether functionally in cooperation with each other or functionally independently of each other but in a same device housing, for example.

In general, it is to be noted that respective functional blocks or elements according to above-described aspects can be implemented by any known means, either in hardware and/or software, respectively, if it is only adapted to perform the described functions of the respective parts. The mentioned method steps can be realized in individual functional blocks or by individual devices, or one or more of the method steps can be realized in a single functional block or by a single device.

Generally, any method step is suitable to be implemented as software or by hardware without changing the idea of the present invention. Devices and means can be implemented as individual devices, but this does not exclude that they are implemented in a distributed fashion throughout the system, as long as the functionality of the device is preserved. Such and similar principles are to be considered as known to a skilled person.

Software in the sense of the present description comprises software code as such comprising code means or portions or a computer program or a computer program product for performing the respective functions, as well as software (or a computer program or a computer program product) embodied on a tangible medium such as a computer-readable (storage) medium having stored thereon a respective data structure or code means/portions or embodied in a signal or in a chip, potentially during processing thereof.

The present invention also covers any conceivable combination of method steps and operations described above, and any conceivable combination of nodes, apparatuses, modules or elements described above, as long as the above-described concepts of methodology and structural arrangement are applicable.

In view of the above, there are provided measures for machine to machine capabilities in mobile communication networks. Such measures exemplarily comprise establishing a connection to obtain machine type communication related services identified by an APN or a service flow identifier from the network, receiving information indicative of a feature of a group of features assigned to a certain functionality, said feature being selected from said group of features based on usage conditions of said connection, and utilizing said feature for said certain functionality in relation to said connection.

Even though the invention is described above with reference to the examples according to the accompanying drawings, it is to be understood that the invention is not restricted thereto. Rather, it is apparent to those skilled in the art that the present invention can be modified in many ways without departing from the scope of the inventive idea as disclosed herein.

### List of acronyms and abbreviations

3GPP
3^{rd} Generation Partnership Project 5GAP 5G access point
APN access point name
CN core network
CP control plane
E2E end to end
ECGI evolved universal terrestrial radio access network cell global identifiers, E-UTRAN cell global ID
eDRX extended discontinuous reception
eNB evolved NodeB, eNodeB
EPS Evolved Packet System
GERAN global system for mobile communication enhanced radio access net-work, GSM enhanced radio access network
GPRS General Packet Radio Service
ID identifier
IP internet protocol
LTE long term evolution
M2M machine to machine
MME mobility management entity
MO mobile originated
MSC mobile switching center
MSISDN mobile subscriber integrated services digital network number
MT mobile terminated
MTC Machine-Type-Communication
MTC-IWF MTC interworking function
NAS non-access stratum
OTT over-the-top
PDN packet data network PDP packet data protocol (
PDN-GW packet data network gateway
PLMN public land mobile network
PS packet switched
PSM power saving mode
RAN radio access network
RAT radio access technologies
S-GW serving gateway
SAE system architecture evolution
SG security gateway
SMS short message service
SMSC short message service centre
TA tracking area
TAI tracking area identity
TAU tracking area update
UE user equipment
UP user plane
UTRAN universal terrestrial radio access network

## Claims

1. A method for performing machine type communication, comprising
establishing (S61) a connection to obtain machine type communication related services identified by an access point name or a service flow identifier from the network,
receiving (S62) information indicative of a feature of a group of features assigned to a certain functionality, and
utilizing (S63) said feature for said certain functionality in relation to said connection,
**characterised in that** the feature is a power saving mechanism that has been selected by the network from the group of features being power saving mechanisms and the selection is based on usage conditions of the machine type communication connection.

2. The method according to claim 1, wherein
in relation to said establishing (S61), said method further comprises
indicating at least one preferred feature of said group of features for a certain functionality, or
indicating at least one supported feature of said group of features for a certain functionality, or
indicating at least one application intended to use said connection.

3. The method according to claim 1 or 2, wherein
said usage conditions comprise at least one of a type of device establishing said connection, a type of applications intended for said connection, a subscribed functionality for said connection, network capabilities, available charging rates, and a nature of said establishing of said connection.

4. The method according to any of claims 1 to 3, wherein
said certain functionality is small data transmission, and
said group of features comprises at least one of transmission utilizing a short message service, transmission utilizing a user plane bearer, transmission utilizing control plane signaling, transmission utilizing a shared user plane bearer, and transmission utilizing a bearer set up on demand.

5. The method according to any of claims 1 to 3, wherein
said certain functionality is a power saving mechanism, and
said group of features comprises at least one of a power saving mode and an extended discontinuous reception cycle.

6. The method according to any of claims 1 to 3, wherein
said certain functionality is mobility of a device establishing said connection, and
said group of features comprises at least one of a list of allowed cells, a list of allowed tracking areas, and a list of allowed radio access technologies.

7. The method according to any of claims 1 to 3, wherein
said certain functionality is mobility of a device establishing said connection,
in relation to said establishing, said method further comprises indicating at least one of a predetermined list of allowed cells, a predetermined list of allowed tracking areas, and a predetermined list of allowed radio access technologies, and
said information indicative of said feature is a grant or a rejection of said established connection based on said predetermined list and a cell being subject of said establishing.

8. A method for enabling machine type communication, comprising
receiving (S71) a connection establishment request for a certain access point name or a certain service flow identifier related to machine type communication,
selecting (S72) a feature from a group of features assigned to a certain functionality, and
receiving (S73) information indicative of said feature to be utilized for said certain functionality in relation to said connection,
**characterised in that** the feature is a power saving mechanism that has been selected by a network from the group of features being power saving mechanisms and the selection is based on usage conditions of the machine type communication connection.

9. The method according to claim 8, wherein
said connection establishment indicates
at least one preferred feature of said group of features for a certain functionality, or
at least one supported feature of said group of features for a certain functionality, or
at least one application intended to use said connection.

10. The method according to claim 8 or 9, wherein
said usage conditions comprise at least one of a type of device establishing said connection, a type of applications intended for said connection, a subscribed functionality for said connection, network capabilities, available charging rates, and a nature of said establishing of said connection.

11. The method according to any of claims 8 to 10, wherein
said certain functionality is small data transmission, and
said group of features comprises at least one of transmission utilizing a short message service, transmission utilizing a user plane bearer, transmission utilizing control plane signaling, transmission utilizing a shared user plane bearer, and transmission utilizing a bearer set up on demand.

12. The method according to any of claims 8 to 10, wherein
said certain functionality is a power saving mechanism, and
said group of features comprises at least one of a power saving mode and an extended discontinuous reception cycle.

13. The method according to any of claims 8 to 10, wherein
said certain functionality is mobility of a device establishing said connection, and
said group of features comprises at least one of a list of allowed cells, a list of allowed tracking areas, and a list of allowed radio access technologies.

14. The method according to any of claims 8 to 10, wherein
said certain functionality is mobility of a device establishing said connection,
said connection establishment indicates at least one of a predetermined list of allowed cells, a predetermined list of allowed tracking areas, and a predetermined list of allowed radio access technologies, and
said information indicative of said feature is a grant or a rejection of said established connection based on said predetermined list and a cell being subject of said connection establishment.

15. An apparatus (30) for performing machine type communication, comprising
establishing means (31) configured to establish a connection to obtain certain machine type communication related services identified by an access point name or a service flow identifier,
receiving means (32) configured to receive information indicative of a feature of a group of features assigned to a certain functionality, and
utilizing means (33) configured to utilize said feature for said certain functionality in relation to said connection'
**characterised in that** the feature is a power saving mechanism that has been selected by the network from the group of features being power saving mechanisms and the selection is based on usage conditions of the machine type communication connection.

16. An apparatus (50) for enabling machine type communication, comprising
receiving means (51) configured to receive a connection establishment request for a certain access point name or a certain service flow identifier related to machine type communication, and
selecting means (52) configured to select a feature from a group of features assigned to a certain functionality, and wherein
said receiving means (51) is further configured to receive information indicative of said feature to be utilized for said certain functionality in relation to said connection,
**characterised in that** the feature is a power saving mechanism that has been selected by the network from the group of features being power saving mechanisms and the selection is based on usage conditions of the machine type communication connection.

17. A computer program product comprising computer-executable computer program code which, when the program is run on a computer, is configured to cause the computer to carry out the method according to any one of claims 1 to 7.

## Patentansprüche

1. Verfahren zum Durchführen von Maschinen-Kommunikation, das Folgendes umfasst:
Errichten (S61) einer Verbindung zum Erhalten von Diensten im Zusammenhang mit Maschinen-Kommunikation, die durch einen Zugangspunktnamen oder eine Dienstflusskennung vom Netzwerk identifiziert werden,
Empfangen (S62) von Informationen, die indikativ für ein Merkmal einer Gruppe von Merkmalen sind, die einer bestimmten Funktionalität zugewiesen sind, und
Nutzen (S63) des Merkmals für die bestimmte Funktionalität im Zusammenhang mit der Verbindung,
**dadurch gekennzeichnet, dass** das Merkmal ein Energiesparmechanismus ist, der durch das Netzwerk aus der Gruppe von Merkmalen, die Energiesparmechanismen sind, ausgewählt wurde, wobei die Auswahl auf Verwendungsbedingungen der Maschinen-Kommunikationsverbindung basiert.

2. Verfahren nach Anspruch 1, wobei:
in Bezug auf das Errichten (S61) das Verfahren ferner Folgendes umfasst:
Anzeigen von zumindest einem bevorzugten Merkmal der Gruppe von Merkmalen für eine bestimmte Funktionalität, oder
Anzeigen von zumindest einem unterstützten Merkmal der Gruppe von Merkmalen für eine bestimmte Funktionalität, oder
Anzeigen von zumindest einer Anwendung, die dazu bestimmt ist, die Verbindung zu verwenden.

3. Verfahren nach Anspruch 1 oder 2, wobei:
die Verwendungsbedingungen zumindest einen Typ von Vorrichtung, die diese Verbindung errichtet, einen Typ von Anwendungen, die für die Verbindung bestimmt sind, eine abonnierte Funktionalität für die Verbindung, Netzwerkfähigkeiten, verfügbare Gebührensätze und ein Wesen des Errichtens der Verbindung umfassen.

4. Verfahren nach einem der Ansprüche 1 bis 3, wobei:
die bestimmte Funktionalität Übertragung von "Small Data" (kleinen Daten) ist, und
die Gruppe von Merkmalen zumindest Übertragung unter Verwendung eines Kurznachrichtendienstes, Übertragung unter Verwendung eines Nutzdatenträgers ("user plane bearer"), Übertragung unter Verwendung von Zeichengabesignalisierung ("control plane signaling"), Übertragung unter Verwendung eines gemeinsam genutzten Nutzdatenträgers und/oder Übertragung unter Verwendung eines bedarfsweise eingerichteten Trägers umfasst.

5. Verfahren nach einem der Ansprüche 1 bis 3, wobei:
die bestimmte Funktionalität ein Energiesparmechanismus ist, und
die Gruppe von Merkmalen zumindest einen Energiesparmodus und/oder einen erweiterten diskontinuierlichen Empfangszyklus ("Extended Discontinuous Reception") umfasst.

6. Verfahren nach einem der Ansprüche 1 bis 3, wobei:
die bestimmte Funktionalität Mobilität einer Vorrichtung ist, die die Verbindung errichtet, und
die Gruppe von Merkmalen zumindest eine Liste von erlaubten Zellen, eine Liste von erlaubten Verfolgungsbereichen und/oder eine Liste von erlaubten Funkzugangstechnologien umfasst.

7. Verfahren nach einem der Ansprüche 1 bis 3, wobei:
die bestimmte Funktionalität Mobilität einer Vorrichtung ist, die die Verbindung errichtet,
in Bezug auf das Errichten das Verfahren ferner Anzeigen von zumindest einer vorbestimmten Liste von erlaubten Zellen, einer vorbestimmten Liste von erlaubten Verfolgungsbereichen und/oder einer vorbestimmten Liste von erlaubten Funkzugangstechnologien umfasst, und
die Information, die indikativ für das Merkmal ist, eine Gewährung oder eine Ablehnung der errichteten Verbindung basierend auf der vorbestimmten Liste und einer Zelle, die der Errichtung unterzogen wird, ist.

8. Verfahren zum Aktivieren von Maschinen-Kommunikation, das Folgendes umfasst:
Empfangen (S71) einer Verbindungserrichtungsanforderung für einen bestimmten Zugangspunktnamen oder eine bestimmte Dienstflusskennung im Zusammenhang mit Maschinen-Kommunikation,
Auswählen (S72) eines Merkmals aus einer Gruppe von Merkmalen, die einer bestimmten Funktionalität zugewiesen sind, und
Empfangen (S73) von Informationen, die indikativ für das Merkmal sind, das für die bestimmte Funktionalität im Zusammenhang mit der Verbindung genutzt werden soll,
**dadurch gekennzeichnet, dass** das Merkmal ein Energiesparmechanismus ist, der durch ein Netzwerk aus der Gruppe von Merkmalen, die Energiesparmechanismen sind, ausgewählt wurde, wobei die Auswahl auf Verwendungsbedingungen der Maschinen-Kommunikationsverbindung basiert.

9. Verfahren nach Anspruch 8, wobei:
die Verbindungserrichtung Folgendes anzeigt:
zumindest ein bevorzugtes Merkmal der Gruppe von Merkmalen für eine bestimmte Funktionalität, oder
zumindest ein unterstütztes Merkmal der Gruppe von Merkmalen für eine bestimmte Funktionalität, oder
zumindest eine Anwendung, die dazu bestimmt ist, die Verbindung zu verwenden.

10. Verfahren nach Anspruch 8 oder 9, wobei:
die Verwendungsbedingungen zumindest einen Typ von Vorrichtung, die diese Verbindung errichtet, einen Typ von Anwendungen, die für die Verbindung bestimmt sind, eine abonnierte Funktionalität für die Verbindung, Netzwerkfähigkeiten, verfügbare Gebührensätze und ein Wesen des Errichtens der Verbindung umfassen.

11. Verfahren nach einem der Ansprüche 8 bis 10, wobei: die bestimmte Funktionalität Übertragung von "Small Data" (kleinen Daten) ist, und
die Gruppe von Merkmalen zumindest Übertragung unter Verwendung eines Kurznachrichtendienstes, Übertragung unter Verwendung eines Nutzdatenträgers ("user plane bearer"), Übertragung unter Verwendung von Zeichengabesignalisierung ("control plane signaling"), Übertragung unter Verwendung eines gemeinsam genutzten Nutzdatenträgers und/oder Übertragung unter Verwendung eines bedarfsweise eingerichteten Trägers umfasst.

12. Verfahren nach einem der Ansprüche 8 bis 10, wobei: die bestimmte Funktionalität ein Energiesparmechanismus ist, und
die Gruppe von Merkmalen zumindest einen Energiesparmodus und/oder einen erweiterten diskontinuierlichen Empfangszyklus ("Extended Discontinuous Reception") umfasst.

13. Verfahren nach einem der Ansprüche 8 bis 10, wobei: die bestimmte Funktionalität Mobilität einer Vorrichtung ist, die die Verbindung errichtet, und
die Gruppe von Merkmalen zumindest eine Liste von erlaubten Zellen, eine Liste von erlaubten Verfolgungsbereichen und/oder eine Liste von erlaubten Funkzugangstechnologien umfasst.

14. Verfahren nach einem der Ansprüche 8 bis 10, wobei:
die bestimmte Funktionalität Mobilität einer Vorrichtung ist, die die Verbindung errichtet,
die Verbindungserrichtung zumindest eine vorbestimmte Liste von erlaubten Zellen, eine vorbestimmte Liste von erlaubten Verfolgungsbereichen und/oder eine vorbestimmte Liste von erlaubten Funkzugangstechnologien anzeigt, und
die Information, die indikativ für das Merkmal ist, eine Gewährung oder eine Ablehnung der errichteten Verbindung basierend auf der vorbestimmten Liste und einer Zelle, die der Verbindungserrichtung unterzogen wird, ist.

15. Einrichtung (30) zum Durchführen von Maschinen-Kommunikation, die Folgendes umfasst:
Errichtungsmittel (31), dazu ausgelegt, eine Verbindung zum Erhalten von Diensten im Zusammenhang mit bestimmter Maschinen-Kommunikation zu errichten, die durch einen Zugangspunktnamen oder eine Dienstflusskennung identifiziert werden,
Empfangsmittel (32), dazu ausgelegt, Informationen zu empfangen, die indikativ für ein Merkmal einer Gruppe von Merkmalen sind, die einer bestimmten Funktionalität zugewiesen sind, und
Nutzungsmittel (33), dazu ausgelegt, das Merkmal für die bestimmte Funktionalität im Zusammenhang mit der Verbindung zu nutzen,
**dadurch gekennzeichnet, dass** das Merkmal ein Energiesparmechanismus ist, der durch das Netzwerk aus der Gruppe von Merkmalen, die Energiesparmechanismen sind, ausgewählt wurde, wobei die Auswahl auf Verwendungsbedingungen der Maschinen-Kommunikationsverbindung basiert.

16. Einrichtung (50) zum Aktivieren von Maschinen-Kommunikation, die Folgendes umfasst:
Empfangsmittel (51), dazu ausgelegt, eine Verbindungserrichtungsanforderung für einen bestimmten Zugangspunktnamen oder eine bestimmte Dienstflusskennung im Zusammenhang mit Maschinen-Kommunikation zu empfangen,
Auswahlmittel (52), dazu ausgelegt, ein Merkmal aus einer Gruppe von Merkmalen auszuwählen, die einer bestimmten Funktionalität zugewiesen sind, und wobei
die Empfangsmittel (51) ferner dazu ausgelegt sind, Informationen zu empfangen, die indikativ für das Merkmal sind, das für die bestimmte Funktionalität im Zusammenhang mit der Verbindung genutzt werden soll,
**dadurch gekennzeichnet, dass** das Merkmal ein Energiesparmechanismus ist, der durch das Netzwerk aus der Gruppe von Merkmalen, die Energiesparmechanismen sind, ausgewählt wurde, wobei die Auswahl auf Verwendungsbedingungen der Maschinen-Kommunikationsverbindung basiert.

17. Computerprogrammprodukt, umfassend computerausführbaren Computerprogrammcode, der, wenn das Programm auf einem Computer ausgeführt wird, dazu ausgelegt ist, den Computer zu veranlassen, das Verfahren nach einem der Ansprüche 1 bis 7 durchzuführen.

## Revendications

1. Procédé permettant d'exécuter une communication entre machines, comprenant :
l'établissement (S61) d'une connexion pour obtenir des services associés à une communication entre machines identifiés par un nom de point d'accès ou un identifiant de flux de service à partir du réseau,
la réception (S62) d'informations indiquant une caractéristique d'un groupe de caractéristiques affectées à une certaine fonctionnalité, et
l'utilisation (S63) de ladite caractéristique pour ladite certaine fonctionnalité en rapport avec ladite connexion,
**caractérisé en ce que** la caractéristique est un mécanisme d'économie d'énergie qui a été sélectionné par le réseau à partir du groupe de caractéristiques qui sont des mécanismes d'économie d'énergie et **en ce que** la sélection est basée sur des conditions d'utilisation de la connexion de communication entre machines.

2. Procédé selon la revendication 1, dans lequel :
en rapport avec ladite étape d'établissement (S61), ledit procédé comprend en outre
l'indication d'au moins une caractéristique préférée dudit groupe de caractéristiques pour une certaine fonctionnalité, ou
l'indication d'au moins une caractéristique prise en charge dudit groupe de caractéristiques pour une certaine fonctionnalité, ou
l'indication d'au moins une application destinée à utiliser ladite connexion.

3. Procédé selon la revendication 1 ou 2, dans lequel :
lesdites conditions d'utilisation comprennent au moins un élément parmi un type de dispositif établissant ladite connexion, un type d'applications destinées à ladite connexion, une fonctionnalité souscrite pour ladite connexion, des capacités réseau, des taux de charge disponibles, et une nature dudit établissement de ladite connexion.

4. Procédé selon l'une quelconque des revendications 1 à 3, dans lequel :
ladite certaine fonctionnalité est une petite transmission de données, et
ledit groupe de caractéristiques comprend au moins un élément parmi une transmission utilisant un service de messages courts, une transmission utilisant un support de plan utilisateur, une transmission utilisant une signalisation de plan de contrôle, une transmission utilisant un support de plan utilisateur partagé, et une transmission utilisant un établissement de support sur demande.

5. Procédé selon l'une quelconque des revendications 1 à 3, dans lequel :
ladite certaine fonctionnalité est un mécanisme d'économie d'énergie, et
ledit groupe de caractéristiques comprend au moins un élément parmi un mode d'économie d'énergie et un cycle de réception discontinue étendu.

6. Procédé selon l'une quelconque des revendications 1 à 3, dans lequel :
ladite certaine fonctionnalité est la mobilité d'un dispositif établissant ladite connexion, et
ledit groupe de caractéristiques comporte au moins un élément parmi une liste de cellules autorisées, une liste de zones de poursuite autorisées, et une liste de technologies d'accès radio autorisées.

7. Procédé selon l'une quelconque des revendications 1 à 3, dans lequel :
ladite certaine fonctionnalité est la mobilité d'un dispositif établissant ladite connexion,
en rapport avec ledit établissement, ledit procédé comprend en outre l'indication d'au moins un élément parmi une liste prédéterminée de cellules autorisées, une liste prédéterminée de zones de poursuite autorisées, et une liste prédéterminée de technologies d'accès radio autorisées, et
lesdites informations indiquant ladite caractéristique sont une autorisation ou un rejet de ladite connexion établie sur la base de ladite liste prédéterminée et une cellule qui fait l'objet dudit établissement.

8. Procédé permettant d'exécuter une communication entre machines, comprenant :
la réception (S71) d'une requête d'établissement de connexion pour un certain nom de point d'accès ou un certain identifiant de flux de service associé à une communication entre machines,
la sélection (S72) d'une caractéristique à partir d'un groupe de caractéristiques affectées à une certaine fonctionnalité, et
la réception (S73) d'informations indiquant ladite caractéristique devant être utilisée pour ladite certaine fonctionnalité en rapport avec ladite connexion,
**caractérisé en ce que** la caractéristique est un mécanisme d'économie d'énergie qui a été sélectionné par un réseau à partir du groupe de caractéristiques qui sont des mécanismes d'économie d'énergie et **en ce que** la sélection est basée sur des conditions d'utilisation de la connexion de communication entre machines.

9. Procédé selon la revendication 8, dans lequel :
ledit établissement de connexion indique
au moins une caractéristique préférée dudit groupe de caractéristiques pour une certaine fonctionnalité, ou
au moins une caractéristique prise en charge dudit groupe de caractéristiques pour une certaine fonctionnalité, ou
au moins une application destinée à utiliser ladite connexion.

10. Procédé selon la revendication 8 ou 9, dans lequel :
lesdites conditions d'utilisation comprennent au moins un élément parmi un type de dispositif établissant ladite connexion, un type d'applications destinées à ladite connexion, une fonctionnalité souscrite pour ladite connexion, des capacités réseau, des taux de charge disponibles, et une nature dudit établissement de ladite connexion.

11. Procédé selon l'une quelconque des revendications 8 à 10, dans lequel :
ladite certaine fonctionnalité est une petite transmission de données, et
ledit groupe de caractéristiques comprend au moins un élément parmi une transmission utilisant un service de messages courts, une transmission utilisant un support de plan utilisateur, une transmission utilisant une signalisation de plan de contrôle, une transmission utilisant un support de plan utilisateur partagé, et une transmission utilisant un établissement de support sur demande.

12. Procédé selon l'une quelconque des revendications 8 à 10, dans lequel :
ladite certaine fonctionnalité est un mécanisme d'économie d'énergie, et
ledit groupe de caractéristiques comprend au moins un élément parmi un mode d'économie d'énergie et un cycle de réception discontinue étendu.

13. Procédé selon l'une quelconque des revendications 8 à 10, dans lequel :
ladite certaine fonctionnalité est la mobilité d'un dispositif établissant ladite connexion, et
ledit groupe de caractéristiques comporte au moins un élément parmi une liste de cellules autorisées, une liste de zones de poursuite autorisées, et une liste de technologies d'accès radio autorisées.

14. Procédé selon l'une quelconque des revendications 8 à 10, dans lequel :
ladite certaine fonctionnalité est la mobilité d'un dispositif établissant ladite connexion,
ledit établissement de connexion indique au moins un élément parmi une liste prédéterminée de cellules autorisées, une liste prédéterminée de zones de poursuite autorisées, et une liste prédéterminée de technologies d'accès radio autorisées, et
lesdites informations indiquant ladite caractéristique sont une autorisation ou un rejet de ladite connexion établie sur la base de ladite liste prédéterminée et une cellule qui fait l'objet dudit établissement de connexion.

15. Appareil (30) permettant d'exécuter une communication entre machines, comprenant :
des moyens d'établissement (31) configurés pour établir une connexion pour obtenir certains services associés à une communication entre machines identifiés par un nom de point d'accès ou un identifiant de flux de service,
des moyens de réception (32) configurés pour recevoir des informations indiquant une caractéristique d'un groupe de caractéristiques affectées à une certaine fonctionnalité, et
des moyens d'utilisation (33) configurés pour utiliser ladite caractéristique pour ladite certaine fonctionnalité en rapport avec ladite connexion,
**caractérisé en ce que** la caractéristique est un mécanisme d'économie d'énergie qui a été sélectionné par le réseau à partir du groupe de caractéristiques qui sont des mécanismes d'économie d'énergie et **en ce que** la sélection est basée sur des conditions d'utilisation de la connexion de communication entre machines.

16. Appareil (50) permettant d'exécuter une communication entre machines, comprenant :
des moyens de réception (51) configurés pour recevoir une requête d'établissement de connexion pour un certain nom de point d'accès ou un certain identifiant de flux de service associé à une communication entre machines, et
des moyens de sélection (52) configurés pour sélectionner une caractéristique à partir d'un groupe de caractéristiques affectées à une certaine fonctionnalité, et
lesdits moyens de réception (51) étant en outre configurés pour recevoir des informations indiquant ladite caractéristique devant être utilisée pour ladite certaine fonctionnalité en rapport avec ladite connexion,
**caractérisé en ce que** la caractéristique est un mécanisme d'économie d'énergie qui a été sélectionné par le réseau à partir du groupe de caractéristiques qui sont des mécanismes d'économie d'énergie et **en ce que** la sélection est basée sur des conditions d'utilisation de la connexion de communication entre machines.

17. Produit programme d'ordinateur comprenant un code de programme informatique exécutable par un ordinateur qui, lorsque le programme est exécuté sur un ordinateur, est configuré pour amener l'ordinateur à mettre en oeuvre le procédé selon l'une quelconque des revendications 1 à 7.
